# EUROPEAN PATENT SPECIFICATION

(11) **EP 0 837 639 B1**
(45) Date of publication and mention of the grant of the patent: **30.01.2002**
(21) Application number: 96923874.0
(22) Date of filing: 10.07.1996
(51) Int. Cl.: A44B 11/00

(54) **SAFETY STRING, LOCK FOR SUCH STRING AND USE OF SUCH STRING**
SICHERUNGSBAND, VERSCHLUSSMITTEL UND DESSEN ANWENDUNG
CORDON DE SECURITE, SYSTEME DE FERMETURE ASSOCIE, ET UTILISATION D'UN TEL CORDON

(30) Priority: 10.07.1995 DK 80895
(43) Date of publication of application: 29.04.1998
(73) Proprietor: Andersen, Morten Kjeldsen, 8300 Odder (DK); Foged, Hans Torben, 5463 Harndrup (DK)
(72) Inventor: Andersen, Morten Kjeldsen, 8300 Odder (DK); Foged, Hans Torben, 5463 Harndrup (DK)
(74) Representative: Nielsen, Leif
(86) International application number: DK9600313
(87) International publication number: WO9702767

(56) References cited:
- DE-B- 1 230 603
- US-A- 2 033 610

## Description

The present invention relates to a string for use as a carrying or fastening device in article clothing and other objects worn on the body and which string is intended for stretching around parts of the body and has at least a first string end and that a first part of a lock is secured to the first string end which part is intended for co-operating with a second part of the lock and that the two parts of the lock has a strain capacity which is smaller than the strain capacity of the string as seen in the axial direction of the string.

The present invention also relates to a lock for use in connection with the string according to the invention as well as the use of such a string.

In many cases it is required that strings of different kinds break in case the string is exposed to a certain strain thus the persons carrying the string, e.g. around the neck, do not suffer any injury.

In case of strings in children's clothing, e.g. in the hood where the string is used as a fastening device around the chin, there is a risk that such strings may be stuck to playthings. Therefore, alternative solutions inside children's clothing are known in the form of providing the article clothing with elastic strings in stead of non-yielding strings. Elastic strings, however, do not possess the same properties as non-elastic strings and among other things they possess the disadvantage that in certain cases it is difficult to tie the elastic strings together.

In other cases, e.g. when strings for spectacles or other application of strings are used as a carrying device around the neck there is a risk that the string gets stuck to a door handle or the like in case of a sudden fall. In case disabled persons use such strings there is a risk that these persons unintentionally get the string wrapped around the neck.

DE 1,230,603 describes a lock for use in connection with clothing, among other things. The lock consists of a first part and a second part which are intended for engagement with each other in order to join the two parts of e.g. an article clothing. The first part of the lock comprises a head shaped as a hammer-head, and the second part of the lock comprises a recess which is intended to engage with the head on the first part. The coupling of the first part and the second part takes place by introducing the head on the first part into the recess on the second part. At a certain strain of the two parts the coupling may be broken. The two parts are secured to e.g. an article clothing by performing a welding of the article clothing in the plastic material from which the lock has been made.

The lock which has been described in the above-mentioned citation possesses different drawbacks. The coupling of the first part and the second part of the lock takes place with a lock which is not symmetrical of rotation. Thus there is a risk that a certain strain upon which the lock is suppose to break is not unambiguous. Furthermore, is it a disadvantage that the first part and the second part of the lock are secured to e.g. an article clothing by welding the article clothing in the parts of the lock. Finally, there is a risk of a permanent deformation of the parts of the lock in case of breakage in the coupling of the lock as a consequence of the overloading of the lock.

US 2,033,610 describes a fastening device for a head which comprises an elastic cord and fastening elements attached upon the ends of the cord. Each of the fastening elements comprises a semi-tubular strip of material having a central area adapted to clamp upon the end of the elastic cord. The central area comprises a plurality of barbs projecting from the edges of the tubular strip and adapted to be pressed down upon the end of the elastic cord. The elastic cord is arranged to be directed substantially at right angles to that portion of the semi-tubular strip to which the end is attached.

The fastening device described in the above-mentioned citation possesses drawbacks compared to the applied use of the present invention. The elastic cord which is to be withheld in the fastening elements comprised of the semi-tubular strip is withheld in the semi-tubular strip by clamping upon the end of the elastic cord and not clamping the elastic cord itself. Thereby a risk exists of the elastic cord being pulled out of the semi-tubular strip. The plurality of barbs that project from the central area of the semi-tubular strip is to be pressed down upon the end of the elastic cord and, as mentioned before, not to be pressed into the elastic cord. Thus, if the elastic cord is being exposed to a parallel to a longitudinal axis of the semi-tubular strip then the elastic cord will be pulled out of the strip. However, as mentioned in the above-mentioned citation the elastic cord is arranged to be directed substantially at right angles to that portion of the semi-tubular strip to which the end is attached which means that the elastic cord is intended for being subjected to a pull at a right to the semi-tubular strip in which case the barbs of the above-mentioned citation are sufficiently effected for withholding the elastic strip in the semi-tubular strip.

It is thus the object of the present invention to show a string which possesses the same properties and advantages as previously used strings, but which does not cause any injury to persons in case the string is exposed to a substantial strain. It is further the object to provide a lock for such a string.

This object is achieved by means of a preferred embodiment in which the first string end is provided with an end-splice with a minimum sectional width, that at least the first part of the lock is provided with a track for the engagement of the first string end which track is U-shaped and extends substantially in a parallel manner with a longitudinal direction of the first part of the lock and is provided with barbs with a mutual distance which is smaller than the minimum sectional width of the end-splice which barbs are directed inwards from the forked branches of the U and downwards to the bottom of the U and that at least the first string end is led down between the forked branches of the U with the end-splice which is located between the bottom of the U and the barbs.

Another embodiment of a string according to the invention comprises a first string end and a second string end which has a minimum sectional width in which the first and second part of the lock is provided with tracks for the engagement of the first respectively second string end which tracks are U-shaped and extend substantially parallel with the longitudinal direction of the first and respective part of the lock and is provided with barbs with a mutual distance which is smaller than the minimum sectional width of the first respectively second string end.

The barbs of the other embodiment of the string according to the invention are directed inwards from the forked branches of the U, downwards to the bottom of the U and forwards towards the foremost end of the respective part of the lock, and that the first and second string ends are led down between the forked branches of the U with the foremost end of the respective string end located between the barbs and the foremost end of the part of the lock.

Strings with these characteristics possess the exact same properties as previously known strings as long as the strings are not exposed to a strain beyond a certain force. If this takes place the lock of the string will break and the string will in this manner not cause any injury to the person carrying the string.

In a preferred embodiment the lock is of the type which does not show a destructive deformation in case of breakage. When the lock breaks it will be possible with such a lock to subsequently join the lock again, thus making use of the string once again.

In a preferred embodiment the lock is of the cylindrical spring lock type. This lock consists of a he part and a she part. The she part consists of a cylinder part which is provided with a recess facing inwards from an inner cylinder surface. The he part consists of a tubular part with a groove facing inwards from an outer side of the tubular part. The tubular part which constitutes the he part is intended to be introduced into the cylinder part, thus the groove engages with the recess.

The fastening of the string proper to the lock may be performed in different ways. In a first embodiment the string shows two halves with a first string end and a second string end which both are provided with end-splices. The first part and the second part of the lock are provided with tracks for the engagement of the first respectively second string end which tracks are U-shaped and extend substantially parallel with the longitudinal direction of the first respectively second part of the lock. The tracks are provided with barbs with a mutual distance which is smaller than the sectional width of the end-splices which barbs are directed inwards from the forked branches of the U and downwards to the bottom of the U. The first and the second string end are secured to each part of the lock in such a manner that the two string ends are led down between the forked branches of the U with the end-splices located between the bottom of the U and the barbs.

The lock may, however, have many other presentations which meet the requirements of breakage at a certain substantial strain. The lock will preferably be made of a plastic material, e.g. POM.

The string proper used may have random cross-sections and dimensions. The string may also be made of many different materials.

### DESCRIPTION OF THE DRAWING

The invention will now be explained with reference to the accompanying drawing, in which
- Fig. 1: shows an embodiment of a string according to the invention,
- Fig. 2: shows a first embodiment of a lock according to the invention,
- Fig. 3: shows a second embodiment of a lock according to the invention,
- Fig. 4: shows a third embodiment of a lock according to the invention, and
- Fig. 5A and Fig. 5B: show an alternative embodiment of another section of the lock.

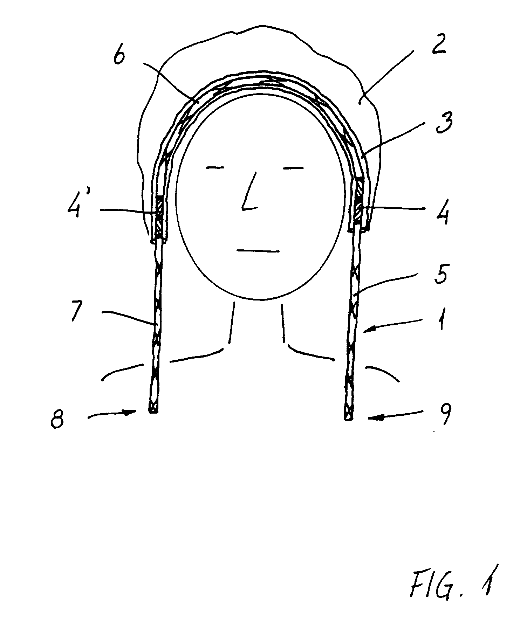

According to the invention Fig. 1 illustrates a string 1 arranged in the hood 2 in an article clothing e.g. a child's jacket carried by a person. The string 1 stretches around a casing 3 in the hood 2 and may either hang loosely as illustrated which is well-known, or be tied around the chin of the person.

The string 1 is along its entire course provided with snaps 4,4' which are provided around the string wherein this is broken in order to create a passage from the first part 5 of the string to an adjacent second part 6 of the string and further down to an adjacent third part 7 of the string. In the outermost ends 8,9 of the string 1 the string in the illustrated embodiment has not been provided with snaps 4, however, snaps 4 may be provided thus several string parts may be fastened to the already snap-fastened parts of the string in order to create a longer string.

The string 1 breaks if it is exposed to a certain strain. The lock 4 also breaks if it is exposed to a certain strain. The strain which the lock 4 may absorb is, however, smaller than the strain which the string 1 may absorb.

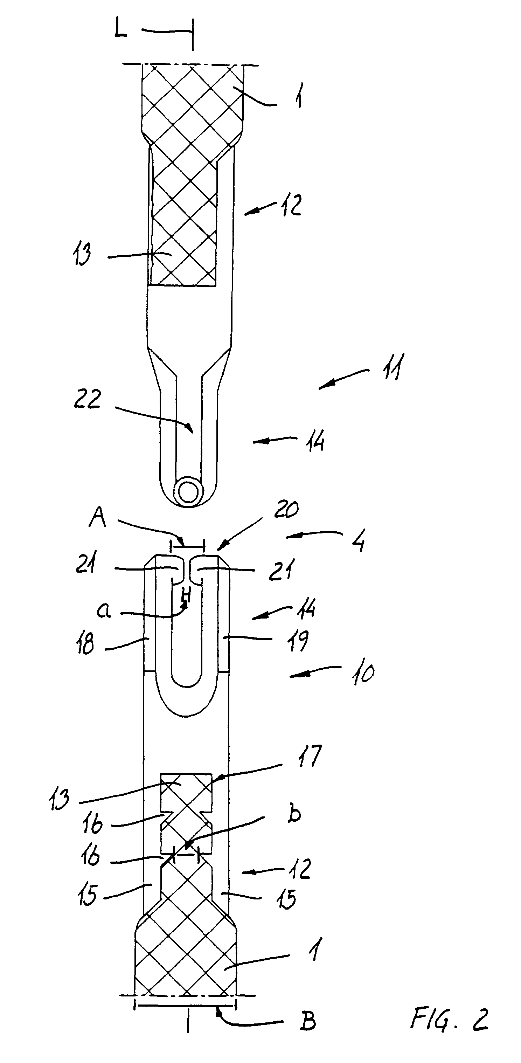

Fig. 2 illustrates a first embodiment of a lock 4 according to the invention for use in connection with a string 1 according to the invention. The lock 4 comprises a first part 10 and a second part 11 which are identical. Each part 10,11 consists of a first section 12 which comprises means for securing the string end 13 to the respective part of the lock 4 and the second section 14 which comprises the lock device proper.

The second section 14 with the lock device proper comprises a U-shaped track which in the illustrated drawing is shown as seen down through the forked branches 15 of the U and across a longitudinal direction L of the respective part of the lock 4. The U-shaped track extends parallel with the longitudinal direction L of the respective part of the lock. The U-shaped track is provided with barbs 16 extending inwards from the forked branches 15 of the U and forwards to the first section 12 of the respective part of the lock 4.

A distance b between opposite barbs 16 is smaller than a sectional width B of the string 1. The string end 13 is led down in the U-shaped track thus a foremost end 17 of the string end is located between the barbs 16 and the first section 12 of the respective part of the lock. The string 1 is thus secured to the respective part of the lock 4 and may not be released, even if the string 1 is exposed to a pull in the longitudinal direction L.

The first section 12 comprises a fork with a first prong 18 and a second prong 19 with mutual distance A. The prongs of the fork 18,19 extend forwards parallel with the longitudinal direction L. An outer end 20 of the prongs of the fork 18,19 is provided with a stop 21 which extends towards the centre of the fork. Between the stops 21 there is a mutual distance a which is smaller than the distance A between the prongs of the fork 18,19.

The opposite identical second part 11 of the lock is turned 90° around the longitudinal direction L in relation to the first part 10 of the lock. The opposite second part 11 of the lock 4 is illustrated in sections thus the inner surface 22 of one of the prongs of the fork is visible.

By a mutual displacement of the two parts 10,11 of the lock 4 against each other along with the longitudinal direction L the stops 21 with which each prong 18,19 is provided will engage with the prongs of the fork 18,19 on the opposite lying part of the lock 4 by means of an elastic displacement away from each of the two prongs of the fork 18,19 in each part 10,11. A locking is thus established in this manner between the first part 10 and the second part 11 of the lock 4 and the two parts will be prevented from disengaging with each other if a smaller strain is exerted upon the string 1 in the longitudinal direction in relation to the force required in order to displace the prongs of the fork 18,19 elastically away from each other. If the string 1, however, is exposed to a relatively larger force the lock 4 will break.

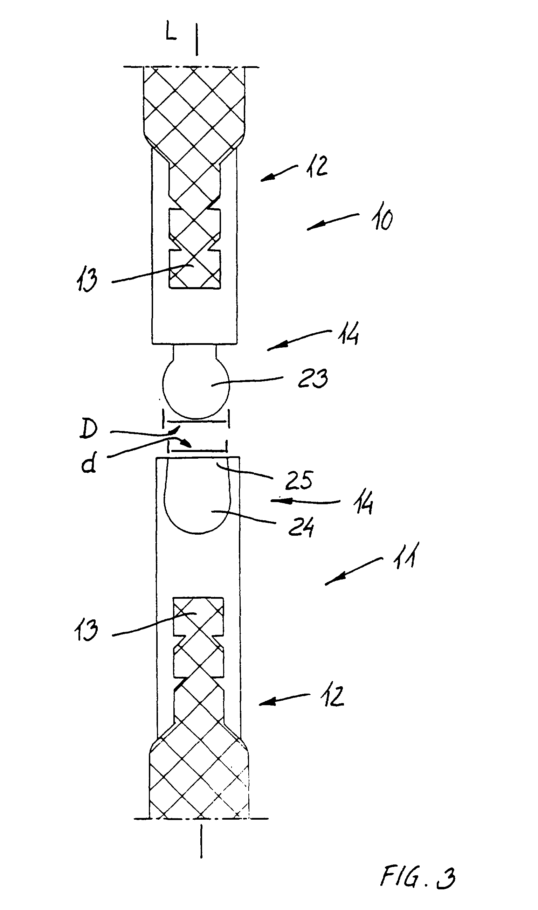

Fig. 3 illustrates another embodiment of a lock 4 according to the invention for use in connection with the string 1 according to the invention. The lock 4, which is illustrated in Fig. 3 also comprises a first section 12 and a second section 14. The second section 14 is identical with the second section illustrated in Fig. 2 and will thus not be further described.

The first section 12, however, comprises, another type of locking device. A first part 10 of the lock 4 has a first section 12 which consists of a part 23 of a ball, which has a diameter D extending forwards. A second part 11 of the lock 4 has a first section 12 which comprises of a recess 24 with a mouth 25 which has an inner diameter d which is smaller than the diameter D for the ball part.

By a mutual displacement of the two parts 10,11 against each other along the longitudinal direction L the ball part 23 with which the first part 10 is provided will engage with the recess 24 which the other part 11 is provided with. By the ball part's 23 passage of the mouth 25 this will expand elastically thus the ball part 23 with the larger diameter D may pass the mouth 25 with the smaller diameter d. When the ball part 23 has passed the mouth 25 a locking will be established between the two parts 10,11 of the lock, and the two parts 10,11 will be prevented from disengaging with each other in case the string 1 is only exposed to a smaller force in the longitudinal direction in relation to the force needed to expand the mouth 25 elastically. In case the string 1, however, is exposed to a relatively larger force the lock 4 will break.

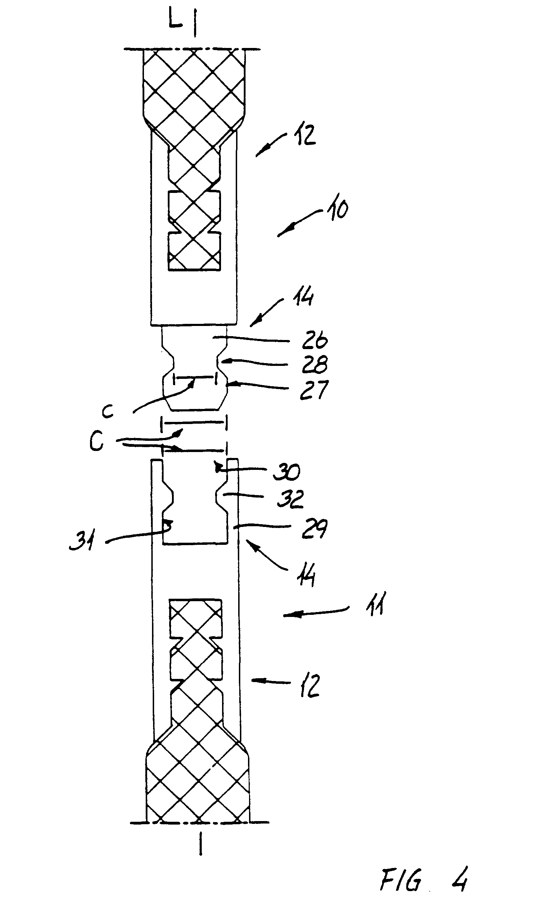

Fig. 4 illustrates a third embodiment of a lock 4 according to the invention for use in connection with a string 1 according to the invention. The lock 4 illustrated in Fig. 4 comprises furthermore a first section 12 and a second section 14. The second section 14 is identical with the second section illustrated in Fig. 2 and Fig. 3 and will therefore not be described further.

The first section 12 comprises, however, another type of locking device. A first part 10 of the lock 4 has a first section 12 which comprises of a part 26 of a cylinder having a diameter C. The cylinder part 26 is on an outer cylinder surface 27 provided with a recess 28. The recess 28 extends along the entire circumference of the cylinder part 26 and has a bottom diameter c which is smaller than the diameter C. A second part 11 of the lock 4 has a first section 12 which consists of a tubular part 29 with a mouth 30 having a diameter C which is identical with the diameter C of the cylinder part 26 on the first part 10 of the lock 4. The tubular part 29 is on an inner tubular surface 31 provided with a groove 32. The groove 32 extends along the entire inner tubular surface 31 and has a top diameter c, which is identical with the bottom diameter c of the recess 28.

By a mutual displacement of the two parts 10,11 against each other along the longitudinal direction L the cylinder part 26 with which the first part 10 has been provided will engage with the tubular part 29 with which the second part 11 is provided. By the cylinder part's 26 first passage of the groove 32 the tubular part 29 will expand elastically thus the cylinder part 26 with the larger diameter C may pass the groove 32 with the smaller top diameter c. By the cylinder part's 26 further passage of the groove 32 the recess 28 will at a time be located outside the groove 32. The groove 32 will then engage with the recess 28 and the elastic expansion of the tubular part 29 stops. Thus a locking is established between the two parts 10,11 of the lock 4 and the two parts 10,11 will be prevented from disengaging with each other if the string 1 is only exposed to a smaller force in the longitudinal direction L in relation to the force necessary in order to expand the tubular part 29 elastically. If, however, the string 1 is exposed to a relatively larger force, the lock 4 will break.

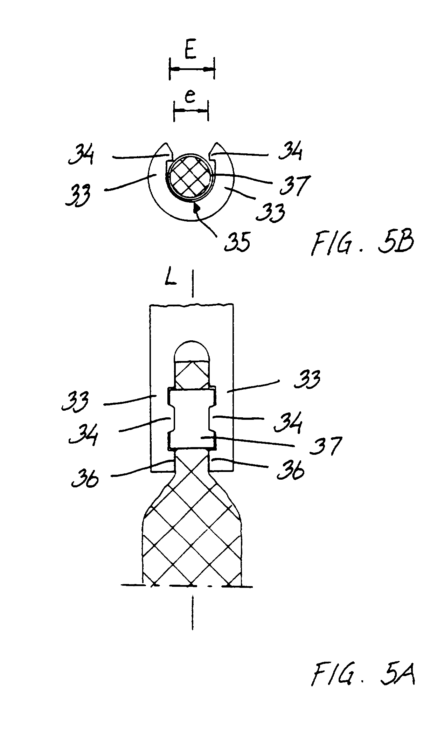

Fig. 5A and Fig. 5B illustrate an alternative embodiment of the second section 14 of the two parts 10,11 of the lock 4. In this embodiment the second section 14 furthermore comprises a U-shaped track which in Fig. 5A is shown as seen down through the forked branches 33 of the U across the longitudinal direction L and which in Fig. 5B is shown in a parallel manner with the longitudinal direction L. The U-shaped track also extends in a parallel manner with the longitudinal direction L of the respective part of the lock 4. The U-shaped track is, however, provided with a first set of flaps 34 extending inwards from the forked branches 33 of the U and downwards to the bottom 35 of the U-shaped track and a second set of flaps 36 extending inwards and towards the first section (not shown) of the respective part of the lock 4.

The string end 13 is provided with an end-splice 37 in the form of a ring which is secured around the string end 13. A distance e between the opposite flaps in the first set of flaps 34 respectively the second set 36 of the flaps, respectively, is smaller than the sectional width E of the end-splice 37. The end 13 of the string 1 is led down in the U-shaped track thus the end-splice 37 is located between the first set 34 of flaps and the bottom 35 of the U-shaped track and between the second set 36 of flaps and the first section (not shown) of the respective part of the lock 4. The string 1 is thus secured to the respective part of the lock 4 and cannot be released in case the string 1 is exposed to a pull in the longitudinal direction L.

The end-splice may consist of different types. A first type of end-splice may consist of a metal ring with a slot. The string end is led down through the slot, after which the ring squeezes around the string end. Another and preferred type of end-splice may consist of a plastic strip which is melted around the string end by means of heated jaws which are squeezed around the string end and the plastic strip, thus the plastic strip is melted into and around the string end.

An alternative way of securing the string end to the respective part of the lock is to mould the part of the lock directly on the string end by leading the string end into a moulding device in order to mould the part of the lock.

The present invention relating to a string and to a lock for use in connection with such a string is in the drawings illustrated in specific embodiments. It will, however, be possible to show other embodiments, e.g. other types of locking devices of the first section of the lock and other types of devices for securing a string end to the respective part of the lock.

## Claims

1. String for use as a carrying or fastening device in article and other objects worn on the body and which string (1) is intended for stretching around parts of the body and has at least a first end (13) and that a first part (10) of a lock (4) is fastened to the first end (13) which part 10 is intended for co-operating with a second part (11) of the lock (4) and that the two parts (10,11) of the lock (4) has a strain capacity which is smaller than the strain capacity of the string (1) as seen in the axial direction of the string, said first end (13) being provided with an end-splice (37) with a minimum sectional width (E), that at least the first part (10) of the lock (4) is provided with a groove for the engagement of the first end (13) which groove is U-shaped and which extends substantially parallel with the longitudinal direction (L) of the first part (10) of the lock and is provided with flaps (34) with a mutual distance (e) which is lesser than the minimum sectional width (E) of the end-splice (37) which flaps (34) are directed inwards from the forked branches (33) of the U and downwards to the bottom (35) of the U and that the smallest first end (13) is arranged between the forked branches of the U with the end-splice (37) which is located between the bottom (35) of the U and the flaps (34).

2. String for use as a carrying or fastening device in article clothing and other objects worn on the body and which string (1) is intended for stretching around parts of the body and has at least a first string end (13) and that a first part (10) of a lock (4) is secured to the first string end (13) which part 10 is intended for co-operating with second part (11) of the lock (4) and that the two parts (10,11) of the lock (4) have a strain capacity which is lesser than the strain capacity of the string (1) as seen in the axial direction of the string, which string (1) has at least a minimal sectional width (B), that at least the first part (10) of the lock (4) is provided with a track for the engagement of the first string end which track is U-shaped and which extend substantially parallel with the longitudinal direction (L) of the first part (10) of the lock (4) and is provided with barbs (16) with a mutual distance (b) which is lesser than the minimal sectional width (B) of the string (1), said barbs (16) being directed inwards from the forked branches (15) of the U, downwards to the bottom of the U and forwards towards the foremost end of the first part (10) of the lock (4), and that the first string end (13) is led down between the forked branches (15) of the U with the foremost end (17) of the first string end located between the barbs (16) and the foremost end of the part (10) of the lock (4) so that the barbs (16) clutch the foremost end (17) of the first string end (13).

3. String according to claim 1 or claim 2, **characterised in that** the string (1) consists of a first half and a second half, that the first part has a first string end, that the second half has a second string end, that the first part (10) of the lock (4) is secured to the first end (13), that the second part (11) of the lock (4) is secured to the second string end, that the first part (10) and the second part (11) of the lock (4) are intended for engagement with each other, and that the first and the second string end are connected to each other by means of the lock (4).

4. String according to claim 1 or claim 2, **characterised in that** that the string (1) consists of a first part (5), of a second part (6) and of at least a third part (7), that the first part (5) has a first string end, that the second part (6) has a first string end a second string end, and that the third part (7) has a first end, that the first part (10) of the first lock (4) is secured to the first string end of the first part (5), that the second part (11) of the first lock (4) is secured to the first string end of the second part (6), that the first part (10) of the second lock (4') is secured to the second part's second string end, that the second part (10) of the second lock (4') is secured to the first string end of the third part (7), that the first part (10) and the second part (11) of the first lock (4) the second lock (4'), respectively, are intended for engaging with each other, that the first string end of the first part (5) and the second string end of the second part are connected to each other by means of the first lock (4), and the first string end of the second part (6) and the first string end of the third part (7) are connected to each other by means of the second lock (4').

5. Lock for a string according to any of the claims 1-4, **characterised in that** the lock comprises two parts (10,11) which are constituted by a she part (11) and a he part (10), respectively, that the he part (10) is constituted by a cylinder part (26), which is provided with a recess (28) facing inwards from an inner cylinder surface, that the he part consists of a tubular part (29) with a groove (32) facing inwards from an outer surface of the tubular part and that the cylinder part (26) is intended for being introduced into the tubular part (29), thus the groove (32) is engaging with the recess (28).

6. Lock for a string according to any of the claims 1-4, **characterised in that** the lock comprises two parts (10,11) which are constituted by a she part (11) and a he part (19), respectively, that the he part (10) consists of a ball part (23) which extends outwards, that the she part (11) consists of a recess (24) which extends inwards, and that the ball part (23) is intended for being introduced into the recess (24), thus the ball part (23) is engaging with the recess (24).

7. Lock for a string according to any of the claims 1-4, **characterised in that** the lock comprises two parts (10,11), which are constituted by a he part (10) and she part (11), respectively, in which both the he part (10) and the she part (11) consist of a fork (14) comprising two prongs (18,19), which at the rearmost ends (20) are provided with stops (21) which are intended for being introduced into the gap between the prongs (18,19) on the corresponding part.

8. Use of a string according to any one of the claims 1-4 as a carrying device for objects worn on the body, preferably objects inside the health sector, e.g. spectacles and aid facilities for handicapped.

9. Use of a string according to any of the claims 1-4 as fastening device in article clothing, preferably in article clothing for children such as coats and jacket.

## Patentansprüche

1. Band für Anwendung als Trage- oder Befestigungsanordnung in Bekleidungsstücken und anderen am Körper getragenen Objekten, wobei das Band (1) für die Erstreckung rund um Körperteilen vorgesehen ist und mindestens ein erstes Ende (13) ausweist, wobei ein erster Teil (10) des Verschlusses (4) am ersten Ende (13) befestigt ist, wobei der Teil 10 für Zusammenwirken mit einem zweiten Teil (11) des Verschlusses (4) vorgesehen ist, wobei die beiden Teilen (10,11) des Verschlusses (4) ein Belastungsvermögen ausweisen, das geringer als das Belastungsvermögen des Bandes (1), gesehen in der axialen Richtung des Bandes, ist, wobei das genannte erste Ende (13) mit einem End-Spleiß (37) mit einer Mindestquerschnittsbreite (E) versehen ist, wobei mindestens der erste Teil (10) des Verschlusses (4) mit einer Rille für das Eingreifen mit dem ersten Ende (13) versehen ist, welche Rille U-förmig ist und sich überwiegend parallel mit der Längsrichtung (L) des ersten Teiles (10) des Verschlusses erstreckt und mit Flügeln (34) mit einem gegenseitigen Abstand (e), der kleiner als die Mindestquerschnittsbreite (E) des End-Spleißes (37) ist, versehen ist, wobei die Flügel (34) von den U-Gabelzweigen (33) aus nach innen und nach unten zum U-Boden gerichtet sind, wobei das kleinere erste Ende (13) zwischen den U-Gabelzweigen mit dem End-Spleiß (37), die zwischen dem U-Boden (35) und den Flügeln (34) angebracht ist, vorgesehen ist.

2. Band für Anwendung als Trage- oder Befestigungsanordnung in Bekleidungsstücken und anderen am Körper getragenen Objekten, wobei das Band (1) für die Erstreckung rund um Körperteilen vorgesehen ist und mindestens ein erstes Bandende (13) ausweist, wobei ein erster Teil (10) des Verschlusses (4) am ersten Bandende (13) befestigt ist, wobei der Teil 10 für Zusammenwirken mit einem zweiten Teil (11) des Verschlusses (4) vorgesehen ist, und wobei die beiden Teilen (10,11) des Verschlusses (4) ein Belastungsvermögen ausweisen, das geringer als das Belastungsvermögen des Bandes (1), gesehen in der axialen Richtung des Bandes, ist, wobei das Band (1) mindestens eine Mindestquerschnittsbreite (B) ausweist, wobei mindestens der erste Teil (10) des Verschlusses (4) mit einer Spur für das Eingreifen des ersten Bandendes versehen ist, wobei die Spur U-förmig ist und sich überwiegend parallel mit der Längsrichtung (L) des ersten Teiles (10) des Verschlusses (4) erstreckt und mit Widerhaken (16) mit einem gegenseitigen Abstand (b), der kleiner als die Mindestquerschnittsbreite (B) des Bandes (1) ist, versehen ist, wobei die genannten Widerhaken (16) von den U-Gabelzweigen (15) aus nach innen, zum U-Boden nach unten und zum vordersten Ende des ersten Teiles (10) des Verschlusses (4) nach vorne gerichtet sind, wobei das erste Bandende (13) nach unten zwischen den U-Gabelzweigen (15) geführt wird, wobei das Vorderende (17) des ersten Bandendes zwischen den Widerhaken (16) und dem Vorderende des Teiles (10) des Verschlusses (4) ) vorgesehen ist, so daß die Widerhaken (16) das Vorderende (17) vom ersten Bandende (13) festgreifen.

3. Band nach Anspruch 1 oder Anspruch 2, **dadurch gekennzeichnet, daß** das Band (1) eine erste Hälfte und eine zweite Hälfte umfaßt, wobei der erste Teil ein erstes Bandende umfaßt, wobei die zweite Hälfte ein zweites Bandende umfaßt, wobei der erste Teil (10) des Verschlusses (4) am ersten Ende (13) befestigt ist, wobei der zweite Teil (11) des Verschlusses (4) am zweiten Bandende befestigt ist, wobei der erste Teil (10) und der zweite Teil (11) des Verschlusses (4) für das Eingreifen ineinander vorgesehen sind, und wobei das erste und das zweite Bandende mittels des Verschlusses (4) miteinander verbunden sind.

4. Band nach Anspruch 1 oder Anspruch 2, **dadurch gekennzeichnet, daß** das Band (1) einen ersten Teil (5), einen zweiten Teil (6) und mindestens einen dritten Teil (7) umfaßt, wobei der erste Teil (5) ein erstes Bandende umfaßt, wobei der zweite Teil (6) ein erstes Bandende und ein zweites Bandende umfaßt, und wobei der dritte Teil (7) ein erstes Ende umfaßt, wobei der erste Teil (10) des ersten Verschlusses (4) am ersten Bandende des ersten Teiles (5) befestigt ist, wobei der zweite Teil (11) des ersten Verschlusses (4) am ersten Bandende des zweiten Teiles (6) befestigt ist, wobei der erste Teil (10) des zweiten Verschlusses (4') am zweiten Bandende des zweiten Teiles befestigt ist, wobei der zweite Teil (10) des zweiten Verschlusses (4') am ersten Bandende des dritten Teiles (7) befestigt ist, wobei der erste Teil (10) und der zweite Teil (11) des ersten Verschlusses (4), beziehungweise des zweiten Verschlusses (4') dafür vorgesehen sind, ineinander einzugreifen, wobei das erste Bandende des ersten Teiles (5) und das zweite Bandende des zweiten Teiles mittels einem ersten Verschlusses (4) mit einander verbunden sind und das erste Bandende des zweiten Teiles (6) und das erste Bandende des dritten Teiles (7) mittels einem zweiten Verschluß (4') miteinander verbunden sind.

5. Verschluß für ein Band nach jeden der Ansprüchen 1-4, **dadurch gekennzeichnet, daß** der Verschluß zwei Teile (10,11) umfaßt, die beziehungsweise einen femininen Teil (11) und einen maskulinen Teil (10) umfassen, wobei der maskuline Teil (10) einen Zylinderteil (26) umfaßt, der mit einer Aussparung (28) versehen ist, die von einer inneren Zylinderoberfläche aus nach innen gerichtet ist, wobei der maskuline Teil einen rohrförmigen Teil mit einer Rille (32) umfaßt, die von einer Außenfläche des rohrförmigen Teiles aus nach innen gerichtet ist, und wobei der Zylinderteil (26) dazu vorgesehen ist, in den rohrförmigen Teil (29) eingeführt zu werden, so daß die Rille (32) mit der Aussparung (28) in Eingriff ist.

6. Verschluß für ein Band nach jeden der Ansprüchen 1-4, **dadurch gekennzeichnet, daß** der Verschluß zwei Teile (10,11) ausweist, die beziehungsweise einen femininen Teil (11) und einen maskulinen Teil (19) umfassen, wobei der maskuline Teil (10) einen Kugelteil (23) ausweist, der sich nach außen erstreckt, wobei der feminine Teil (11) eine Aussparung (24) umfaßt, die sich nach innen erstreckt, und wobei der Kugelteil (23) für die Einführung in die Aussparung (24) vorgesehen ist, so daß der Kugelteil (23) mit der Aussparung (24) in Eingriff ist.

7. Verschluß für ein Band nach jeden der Ansprüchen 1-4, **dadurch gekennzeichnet, daß** der Verschluß zwei Teile (10,11) ausweist, die beziehungsweise einen femininen Teil (11) und einen maskulinen Teil (19) umfassen, wobei sowohl der maskuline Teil (10) als auch der feminine Teil (11) einen Gabel umfassen, der zwei Zinken (18,19) ausweist, die an ihren hinteren Enden (20) mit Aufenthalen (21) versehen sind, die für die Einführung in den Zwischenraum zwischen den Zinken (18,19) am entsprechenden Teil vorgesehen sind.

8. Anwendung eines Bandes nach jeden der Ansprüchen 1-4 als Trageanordnung für am Körper getragenen Objekten, vorzugsweise Objekten innerhalb der Gesundheitssektor, wie z.B. Brillen und Hilfsmitteln für Behinderte.

9. Anwendung eines Bandes nach jeden der Ansprüchen 1-4 als Befestigungsanordnung in Bekleidungsstücken, vorzugsweise in Bekleidungsstücken für Kinder, wie Manteln und Jacken.

## Revendications

1. Cordon à l'usage d'organe de support ou de fixation dans les effets d'habillement et d'autres effets mis sur le corps, ledit cordon (1) étant destiné à s'étendre autour des parties du corps et possédant au moins un premier bout de cordon (13) et qu'une première partie (10) d'une serrure (4) est fixée au premier bout de cordon (13), ladite partie (10) est destinée à coopérer avec une deuxième partie (11) de la serrure (4) et que les deux parties (10,11) de la serrure (4) ont une capacité de charge qui est plus petite que la capacité de charge du cordon (1) comme vu dans la direction axiale du cordon, ledit premier bout de cordon (13) étant prévu d'un jonction de bout (37) avec une largeur de coupe transversale minimum (E), qu'au moins la première partie (10) de la serrure (4) est prévue d'un sillon pour l'engagement du premier bout de cordon (13), ledit sillon ayant la forme d'U et s'étendant essentiellement parallèlement à la direction longitudinale (L) de la première partie (10) de la serrure et étant prévu de crans (34) avec une distance mutuelle (e) qui est plus petite que la largeur de coupe transversale minimum (E) du jonction de bout (37), lesdits crans (34) sont dirigés vers l'intérieur des branches (33) de l'U et vers le bas au fond (35) de l'U et que le premier bout de cordon le plus petit (13) est disposé entre les branches de l'U avec le jonction de bout (37) qui est situé entre le fond (35) de l'U et les crans (34).

2. Cordon à l'usage d'organe de support ou de fixation dans les effets d'habillement et d'autres effets mis sur le corps, ledit cordon (1) étant destiné à s'étendre autour des parties du corps et possédant au moins un premier bout de cordon (13) et qu'une première partie (10) d'une serrure (4) est fixée au premier bout de cordon (13), ladite partie (10) est destinée à coopérer avec une deuxième partie (11) de la serrure (4) et que les deux parties (10,11) de la serrure (4) ont une capacité de charge qui est plus petite que la capacité de charge du cordon (1) comme vu dans la direction axiale du cordon, ledit cordon (1) a au moins une largeur de coupe transversale minimum (B), qu'au moins la première partie (10) de la serrure (4) est prévue d'un sillon pour l'engagement du premier bout de cordon et ledit sillon ayant la forme d'U et s'étendant essentiellement parallèlement à la direction longitudinale (L) de la première partie (10) de la serrure et étant prévu de barbelures (16) avec une distance mutuelle (b) qui est plus petite que la largeur de coupe transversale minimum (B) du cordon (1), lesdites barbelures (16) étant dirigées vers l'intérieur des branches (15) de l'U, vers le bas au fond de l'U et vers l'avant à l'extrémité de l'avant de la première partie (10) de la serrure (4) et que le premier bout de cordon (13) est dirigé en bas entre les branches (15) de l'U avec l'extrémité de l'avant (17) du premier bout de cordon et situé entre les barbelures (16) et l'extrémité de l'avant de la partie (10) de la serrure (4) de sorte que les barbelures (16) engagent l'extrémité de l'avant (17) du premier bout de cordon (13).

3. Cordon selon la revendication 1 ou la revendication 2, **caractérisé en ce que** le cordon (1) comprend une première moitié et une deuxième moitié, que la première partie a un premier bout de cordon, que la deuxième moitié a un deuxième bout de cordon, que la première partie (10) de la serrure (4) est securée au premier bout (13), que la deuxième partie (11) de la serrure (4) est fixée au deuxième bout de cordon, que la première partie (10) et la deuxième partie (11) de la serrure (4) sont destinées à s'engager l'une dans l'autre, et que le premier bout de cordon et le deuxième bout de cordon sont liès l'un à l'autre à l'aide de la serrure (4).

4. Cordon selon la revendication 1 ou la revendication 2, **caractérisé en ce que** le cordon (1) comprend une première partie (5), une deuxième partie (6) et au moins une troisième partie (7), que la première partie (5) a un premier bout de cordon, que la deuxième partie (6) a un premier bout de cordon et un deuxième bout de cordon, et que la troisième partie (7) a un premier bout, que la première partie (10) de la première serrure (4) est fixée au premier bout de cordon de la première partie (5), que la deuxième partie (11) de la première serrure (4) est fixée au premier bout de cordon de la deuxième partie (6), que la première partie (10) de la deuxième serrure (4') est fixée au deuxième bout de cordon de la deuxième partie, que la deuxième partie (10) de la deuxième serrure (4') est fixée au premier bout de cordon de la troisième partie (7), que la première partie (10) et la deuxième partie (11) de la première serrure (4) respectivement la deuxième serrure (4') sont destinées à s'engager l'une dans l'autre, que le premier bout de cordon de la première partie (5) et le deuxième bout de cordon de la deuxième partie sont liés l'un à l'autre à l'aide de la première serrure (4) et le premier bout de cordon de la deuxième partie (6) et le premier bout de cordon de la troisième partie (7) sont liés l'un à l'autre à l'aide de la deuxième serrure (4').

5. Serrure d'un cordon selon l'une quelconque des revendications 1-4, **caractérisée en ce que** la serrure comporte deux parties (10,11) constituées d'une partie femelle (11) et d'une partie mâle (10) respectivement, que la partie mâle (10) comprend une partie de cylindre (26) prévue d'une cavité (28) orientée vers l'intérieur d'une surface de cylindre intérieure, que la partie mâle comprend une partie tubulaire (29) avec un sillon (32) orienté vers l'intérieur d'une surface extérieure de la partie tubulaire et que la partie de cylindre (26) est destinée à être introduite dans la partie tubulaire (29), le sillon (32) étant ainsi en engagement avec la cavité (28).

6. Serrure d'un cordon selon l'une quelconque des revendications 1-4, **caractérisée en ce que** la serrure comporte deux parties (10,11) constituées d'une partie femelle (11) et d'une partie mâle (19) respectivement, que la partie mâle (10) comprend une partie de balle (23) s'étendant vers l'extérieur que la partie femelle (11) comprend une cavité (24) s'étendant vers l'intérieur et que la partie de balle (23) est destinée à être introduite dans la cavité (24), la partie de balle (23) étant ainsi en engagement avec la cavité (24).

7. Serrure d'un cordon selon l'une quelconque des revendications 1-4, **caractérisée en ce que** la serrure comporte deux parties (10,11) constituées d'une partie mâle (10) respectivement d'une partie femelle (11), dans lesquelles la partie mâle (10) et la partie femelle (11) comprennent une fourchette (14) comprenant deux branches (18,19) qui dans les extrémités externes (20) sont prévues de butées (21) qui sont destinées à être introduites dans l'intervalle entre les branches (18,19) sur la partie correspondante.

8. Usage d'un cordon selon l'une quelconque des revendications 1-4 comme un organe de support pour les effets d'habillement mis sur le corps, de préférence des effets dans le secteur de la santé, par exemple des lunettes et des équipements pour handicapés.

9. Usage d'un cordon selon l'une quelconque des revendications 1-4 comme un organe de fixation dans les effets d'habillement, de préférence dans les effets d'habillement pour enfant comme des manteaux et des vestes.
